# EUROPEAN PATENT APPLICATION

(11) **EP 2 740 565 A1**
(43) Date of publication of application: **11.06.2014**
(21) Application number: 12382482.3
(22) Date of filing: 04.12.2012
(51) Int. Cl.: B23P 15/26, F28F 9/02, F28F 9/18, F28D 7/00

(54) **Heat exchanger for EGR systems**

(71) Applicant: BorgWarner Inc., Auburn Hills, MI 48326 (US)
(72) Inventor: Hermida Domínguez, Xóan Xosé, E-36380 Gondomar - Pontevedra (ES)
(74) Representative: ABG Patentes, S.L.

(57) **Abstract**

The present invention is a heat exchanger for EGR systems particularly configured to allow a greater degree of compaction of the conduits through which the gas to be cooled passes. The invention is characterized by a method for joining the ends of the conduits and the baffles such that two or more conduits share one and the same perforation of the baffle in which the conduits are housed and are welded to one another through a contacting perimetral segment and the baffle and conduit are welded to one another in the remaining perimetral segment. Another object of this invention is the method of manufacturing said heat exchanger.

## Description

### Object of the Invention

The present invention is a heat exchanger for EGR systems particularly configured to allow a greater degree of compaction of the conduits through which the gas to be cooled passes.

The invention is characterized by a method for joining the ends of the conduits and the baffles such that two or more conduits share one and the same perforation of the baffle in which the conduits are housed and are welded to one another through a contacting perimetral segment and the baffle and conduit are welded to one another in the remaining perimetral segment.

Another object of this invention is a method of manufacturing said heat exchanger.

### Background of the Invention

One of the major limitations in designing devices for EGR (Exhaust Gas Recirculation) systems is the space available in the engine compartment. This limitation has sparked a progressive search for technical solutions which allow reducing the space required by each of the components of an EGR system, and particularly the larger components such as the EGR heat exchanger, that allows removing heat from exhaust gases by means of a coolant liquid to enable re-introducing part of the exhaust gases in the engine intake manifold.

The greatest requirements concerning the volume occupied by the heat exchanger involve the need of achieving a greater efficiency per volume unit and therefore a greater degree of compaction of the conduits forming the assembly of conduits through which the gas circulates in the shell of the exchanger through which the coolant liquid circulates.

There are many heat exchangers in EGR systems in which the construction thereof is based on using two baffles located at either end of the shell housing the ends of the EGR gas cooling conduits.

Each baffle is perforated such that each perforation houses one end of a conduit. The leak-tight joint between the baffle and the conduit is by means of braze welding. The perforations in the baffle are obtained by means of a die-cutting operation where a set of punches perforate the baffle plate obtaining the set of perforations intended for housing the ends of the conduits.

In this die-cutting operation, it is not possible for the perforations to be made too close to one another since the material arranged between perforations is what must withstand the die-cutting operation maintaining both plate integrity and perforation quality. In practice, the maximum distance at which two perforations can be made with respect to one another is of the order of the thickness of the plate from which the baffle is made.

This limit in perforation closeness therefore entails a limit in the number of conduits that can be introduced in a specific area of the cross-section of the exchanger.

The invention proposes a way for joining the baffle and the conduits which allows overcoming this compaction limit since more than one conduit is incorporated in one and the same perforation, making the joint between the baffle and each conduit as well as the joint between the conduits through a contacting segment compatible.

### Description of the Invention

The present invention relates to a heat exchanger for EGR systems allowing a greater degree of compaction of the inner hot gas cooling conduits with respect to that of the state of the art. The exchanger comprises:
- *a plurality of conduits intended for the passage of the EGR gas to be cooled,*
- *a first baffle and a second baffle where each baffle has perforations for the passage of the ends of the conduits such that one end of the conduit is housed in a perforation of the first baffle by means of a leak-tight braze welded joint and the opposite end of the same conduit is housed in a perforation of the second baffle by means of a leak-tight braze welded joint,*
- *a shell enclosing the assembly of conduits giving rise* to *a chamber intended for housing the coolant liquid circulating on the outside of the conduits, where this shell comprises an inlet for the entry of the coolant liquid and an outlet for the exit of said coolant liquid.*

The configuration set forth according to these technical features corresponds to an exchanger formed by a shell which preferably extends according to a longitudinal direction mainly defined by the direction of the conduits intended for the passage of an EGR gas to be cooled and which also matches the main direction of said shell housing said conduits.

The shell is limited by two baffles even though it is possible to consider cases in which the baffle is prolonged integrally with the shell or with a part thereof. One baffle receives one end of the conduits and the other baffle receives the opposite end of the conduits. A cavity housing the coolant fluid, preferably a liquid, having an inlet and outlet for communicating the cavity with the cooling circuit is thus formed between the shell and the conduits.

On the other hand, the conduits have an end through where the fluid to be cooled, preferably the EGR gas originating from the combustion engine, enters and another outlet end.

Additionally
- *at least one perforation houses two or more ends of the conduits,*
- *the ends of the at least two or more conduits housed in the same perforation are in contact according* to *their cross-section in at least one segment of their perimeter; and,*
- *these same ends of the at least two or more conduits housed in the same perforation according to the same cross-section are also in contact with the edge of the perforation housing it in at least another segment of their perimeter; and,*
- *where the joint in the segment between the contacting conduits housed in the same perforation and the joint in the segment between the conduits and the edge of the same perforation is by means of brazing.*

The most relevant difference with respect to the state of the art is that one and the same perforation houses two or more conduits. The invention allows there to be two or more conduits in one and the same perforation, meaning that the perforation can be made by means of die-cutting techniques. The perforation can be made because the ends of the at least two or more conduits housed in the same perforation are in contact according to their cross-section in at least one segment of their perimeter. This segment of their perimeter determines a minimum separation between points arranged opposite the same perforation, preventing the existence of extremely weak areas which would prevent a suitable die-cutting operation in correspondence with the limitations described in the state of the art. The shape of the perforation is such that the same ends of the at least two or more conduits housed in the same perforation according to the same cross-section are also in contact with the edge of the perforation housing it in at least another segment of their perimeter. This other segment in which the edge of the perforation contacts the conduit is a segment which has a configuration suitable for being die-cut.

Some possible configurations both of the ends of the conduits and of the perforations will be described in greater detail in the embodiments of the invention.

Both the joint in the segment between the contacting conduits housed in the same perforation and the joint in the segment between the conduits and the edge of the same perforation is by means of brazing. Braze welding requires using a brazing paste between the surfaces to be joined, in this case, between the surface of the edge generated in the perforation and the perimetral segments of the conduits which are in contact with said edge of the perforation, and between the segments of conduit housed in the same perforation which are in contact.

The brazing paste melts when passed through the brazing furnace and gives rise to the joint between the contacting surfaces.

The most common configuration of the inner conduits of the exchanger in the state of the art is a tube having a circular section. This configuration in which "the ends of the at least two or more conduits housed in the same perforation are in contact according to their cross-section in at least one segment of their perimeter" is possible because the conduits are adapted, at least at their ends, to be in contact not at a point as would be the case in a circular section but rather in a segment.

A simple way to obtain conduits which allow having a contacting segment is by using tubes having a circular section in which a cold forming operation has been carried out for forming the end thereof to obtain a polygonal section, for example a hexagonal section.

Another object of the invention is a method of manufacturing the exchanger. This method of manufacturing includes a stamping operation for stamping the ends of the conduits by means of an element acting on each hollow end of said ends of the conduits to cause the expansion of said end of the conduit, being fitted to the edge of the perforation of the baffle housing it. This operation allows a good braze welding joint since the good contact between surfaces gives rise to a brazing paste coating when it melts.

To carry out the invention, it is possible to use the conduits suitable for providing a contacting segment or it is possible that this stamping operation used for securing the braze welding also serves for the expansion caused by stamping to generate a section of the conduit which gives rise to a contacting segment, not only between contacting conduits but also between the conduit and the edge of the perforation where the conduit is housed.

Considering the method of manufacturing, the steps giving rise to exchanger manufacture are:
- *providing a plurality of conduits intended for the passage of an EGR gas to be cooled,*
- *providing a first baffle and a second baffle with at least one perforation intended for housing two* or *more ends of the conduits,*
- *providing a shell with at least one inlet and an outlet for the passage of the coolant intended for enclosing the assembly of conduits giving rise* to *a chamber intended for housing the coolant liquid circulating on the outside of the conduits,*
- *coupling the first baffle and the second baffle* to *the shell with the placement of brazing paste between the shell and the baffles,*
- *introducing the conduits in the shell such that one end of each conduit is housed in a perforation of the first baffle and the opposite end of said conduit is housed in a perforation of the second baffle, and where at least one of the perforations houses two or more ends of a conduit,*
- *providing a brazing paste at the ends of the conduits in the area in contact with the edges of the perforations of the baffles,*
- *stamping the ends of the conduits by means of an element acting on each hollow end of said ends of the conduits to cause the expansion of said end of the conduit, being fitted to the edge of the perforation of the baffle housing it such that the ends of the conduits housed in the same perforation are expanded until:*
   - *the ends of the at least two or more conduits housed in the same perforation are in contact according to their cross-section in at least one segment of their perimeter; and,*
   - *these same ends of the at least two or more conduits housed in the same perforation according to the same cross-section are also in contact with the edge of the perforation housing it in at least another segment of their perimeter*
- *heating the assembly to obtain leak-tight welding on the contacting surfaces by means of a brazing paste.*

### Description of the Drawings

These and other features and advantages of the invention will be shown more clearly from the following detailed description of a preferred embodiment provided only by way of illustrative and non-limiting example in reference to the attached drawings.
Figure 1 shows a heat exchanger of the state of the art seen in a section according to a central plane parallel to longitudinal direction X-X'.
Figure 2 shows a front view of one of the baffles of the exchanger shown in the preceding figure with a conduit arrangement having a minimum separation imposed in correspondence with the thickness of the baffle plate.
Figure 3 shows a baffle according to an embodiment of the invention comprising grooved perforations suitable for housing a plurality of conduits. This same figure shows an enlarged view of one of the grooves as well as groove configuration details.
Figure 4 shows the baffle of the preceding figure once it houses the conduits with their ends already welded by means of braze welding. Like the preceding figure, this figure also shows an enlarged view of one of the grooves, this time with the conduits housed therein.
Figure 5 shows a particular configuration of the groove and the ends of the conduits which are housed in said groove.

### Detailed Description of the Invention

According to the first inventive aspect, the present invention relates to a heat exchanger particularly suitable for EGR systems offering a greater degree of compaction of the inner conduits with respect to that offered in the state of the art.

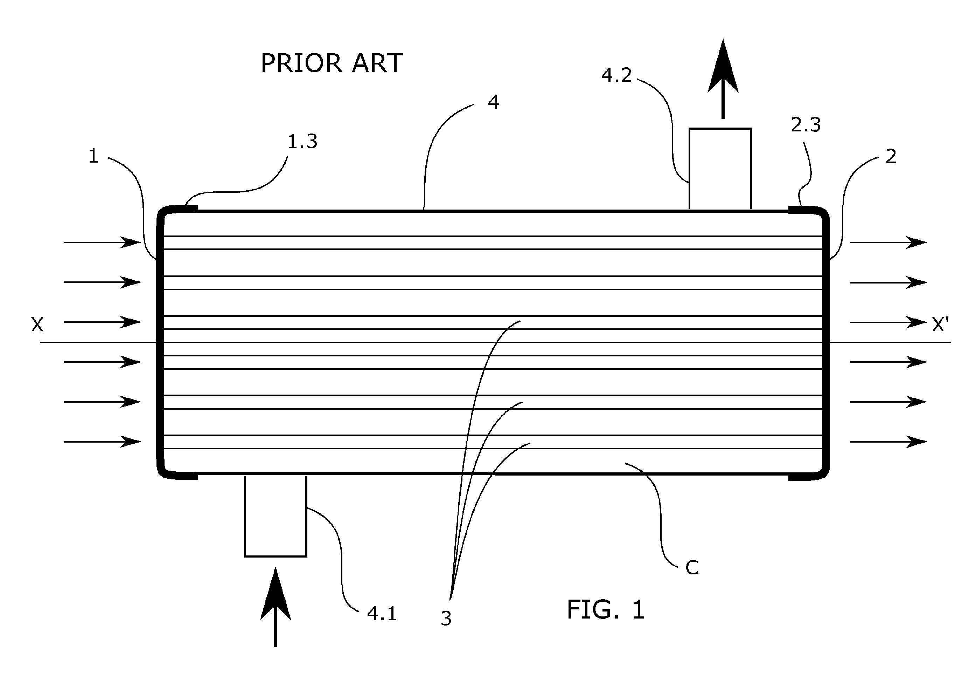

The general structure of a heat exchanger as known in the state of the art is shown in Figure 1. The heat exchanger shown in Figure 1 has a shell (4) formed by a cylindrical body extending according to a longitudinal direction X-X'. The shell (4) is limited at its ends by two baffles (1, 2) which in this case are configured in the form of a closure, i.e., they are formed by means of a planar plate the periphery of which has a prolongation in the form of a cylindrical sleeve (1.3, 2.3) surrounding the body of the shell (4) on the outside. In this particular case the joint between the baffles (1, 2) and the cylindrical body (4) is by means of braze welding and said welding can be carried out at the same time that other braze weldings are applied.

Another alternative mode for joining the baffle (1, 2) and the shell (4) is by using a planar configuration for the baffle (1, 2) resting on the perimetral edge of the shell. The assembly formed by the shell (4) and the baffle (1, 2) is surrounded by a diffusing hood, these three parts being joined by brazing.

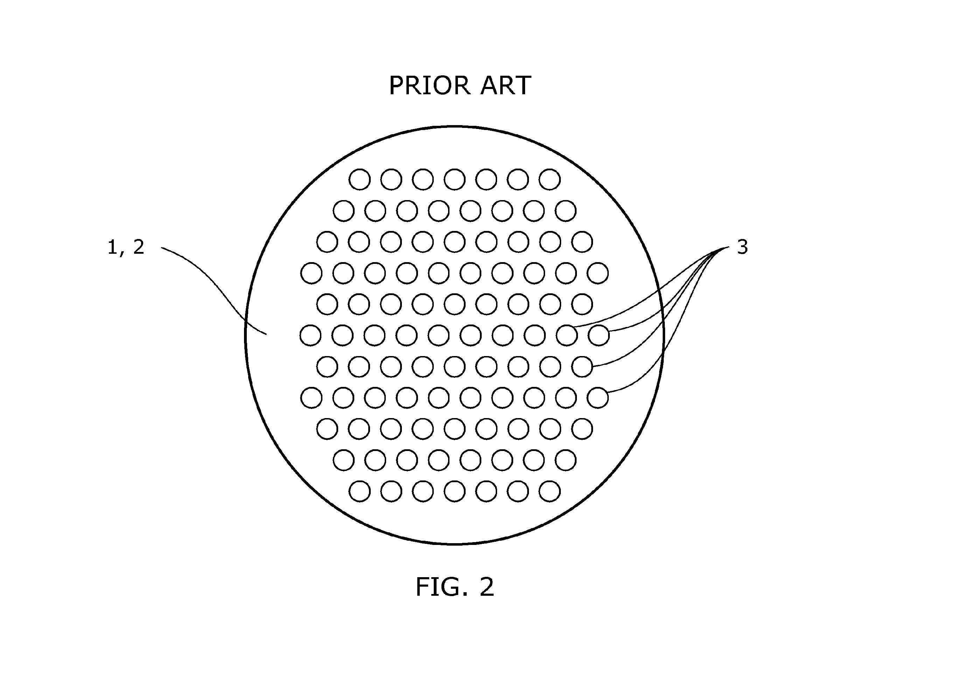

It is seen in this same section that the shell (4) configures a cavity (C) intended for housing the coolant liquid entering through an inlet (4.1) arranged close to an end of the shell (4) and exiting through an outlet (4.2) arranged at the opposite end, coating the outer surface of a plurality of conduits (3) housed in the same cavity (C). In particular, the conduits (3) extend from the first baffle (1) to the second baffle (2) oriented in the longitudinal direction X-X' and spatially distributed according to a cross-section as shown in Figure 2. Figure 2 does not show the cross-section of the exchanger but the front view of one of the baffles (1, 2), however said front view shows the same spatial distribution of the conduits (3) as the cross-section of the exchanger.

The ends of the conduits (3) having a circular section are housed in perforations of the baffles (1, 2) which also have a circular section such that each perforation houses only one conduit (3).

The common method of manufacturing such conduits (3) is to first assemble the baffles (1, 2) on the cylindrical body of the shell (4) and then introduce the conduits (3) matching up each conduit (3) with a perforation of each baffle (1, 2) in a subsequent step.

A way to facilitate introducing the conduits (3) in the perforations consists of introducing several rods through the perforations of one of the baffles (1, 2) such that such rods have a length causing them to protrude through the corresponding perforations of the other baffle (1, 2). These rods act as guides for inserting each conduit (3) so it is sufficient to match up each conduit (3) with a rod during assembly for suitably positioning said conduit (3) in the perforations of each baffle (1, 2).

Once they are located in the exchanger and the brazing paste is applied, a stamping operation is carried out with an element acting on each hollow end of each end of the conduit (3) to cause its expansion, being fitted to the edge of the perforation of the baffle (1, 2).

By means of this expansion a snug fit is obtained between the perimetral area of the end of the conduit (3) and the edge of the perforation of the baffle plate (1, 2) favoring the correct welding and at the same time allowing handling the assembly to carry it to the brazing furnace.

Figure 1 schematically shows the thickness of the baffles (1, 2), where this thickness is what imposes a limit in perforation closeness as shown in Figure 2. The staggered arrangement in Figure 2 improves the compaction between conduits but does not allow bringing them closer.

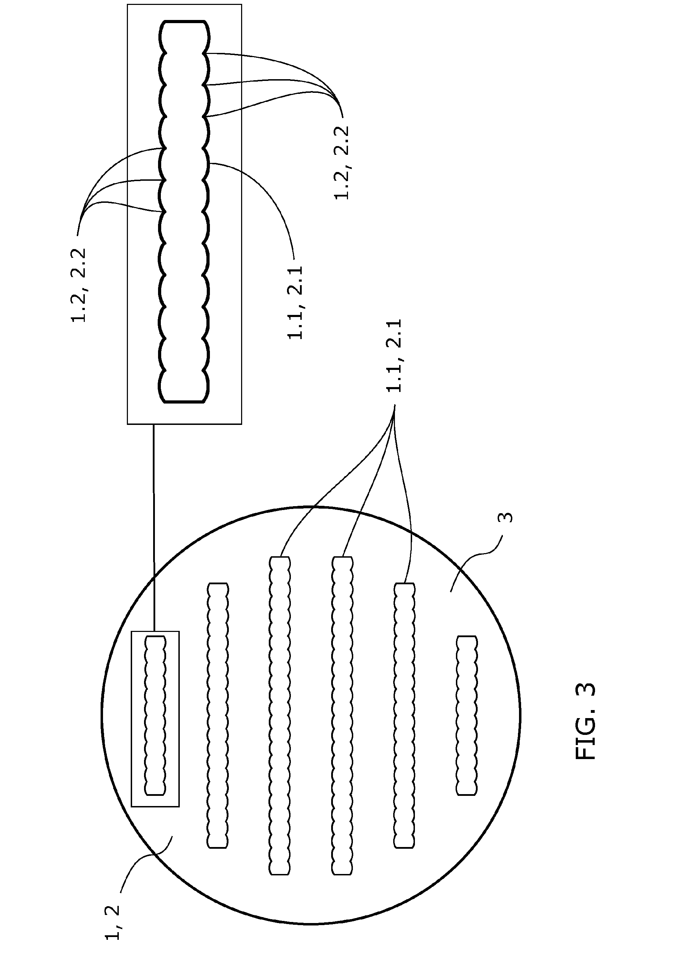

Figure 3 shows a front view of a baffle (1, 2) according to an embodiment of the invention where the perforations (1.1, 2.1) are grooved and suitable for housing more than one conduit (3).

In particular, the example shown in Figure 3 has longitudinal grooves configured with side edges in curved segments giving rise to protrusions (1.2, 2.2). In this embodiment, these protrusions (1.2, 2.2) are arranged on both sides of the longitudinal grooves and face one another such that they define different housings for the ends of the conduits (3).

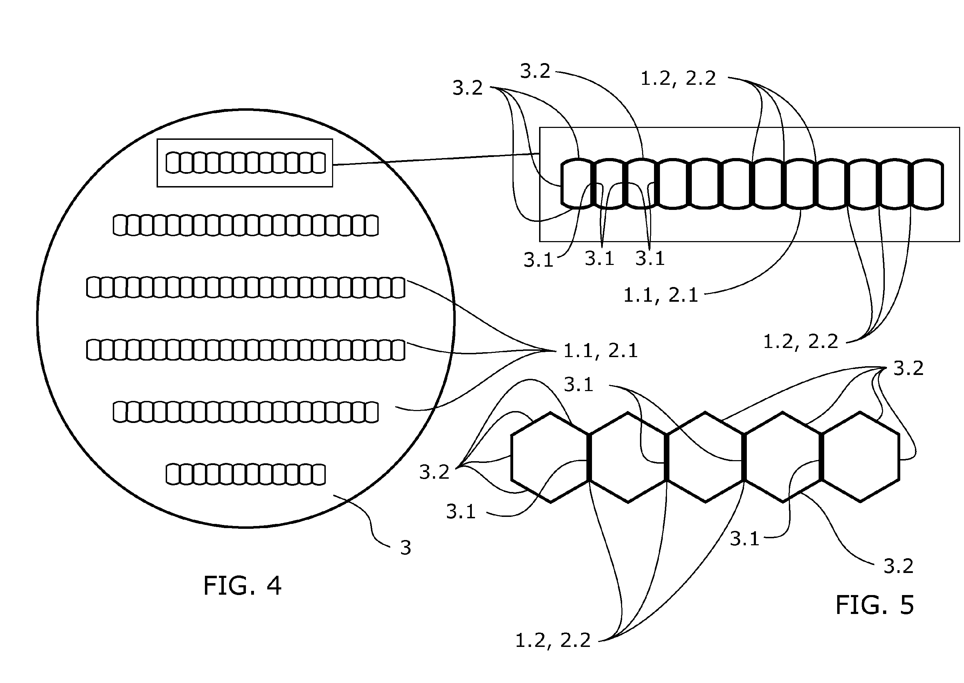

Figure 4 shows the first and second baffles (1, 2) of Figure 3 with the ends of the conduits (3) housed in the perforation (1.1, 2.1) in the form of a longitudinal groove. According to this embodiment, the configuration of the section of each of the ends of the conduits (3) has two different segments. One segment (3.1) is in contact with the consecutively arranged conduit (3), the preceding conduit, the subsequent conduit or both, and at least another segment (3.2) is in contact with the edge of the grooved perforation (1.1, 2.1).

As shown in the example used in the figure, the ends of the conduits (3) have a configuration according to two straight parallel walls and two curved walls connecting the ends of said straight walls. The end of the conduit (3) which is located at any of the final ends of the grooved perforation (1.1, 2.1) has a single contacting segment (3.2) in contact with the edge of the perforation (1.1, 2.1) and it corresponds to the straight wall arranged at the end of the grooved perforation (1.1, 2.1) as well as the curved walls. It likewise has a single segment (3.1) in contact with another conduit (3), the segment corresponding to the other straight wall which is contiguous to the next conduit (3).

Any of the ends of the conduits (3) located in the perforation (1.1, 2.1) is located between two protrusions (1.2, 2.2). This time, there are two segments (3.2) in contact with the edge of the perforation (1.1, 2.1), which segments correspond to the curved walls, and there are two segments (3.1) in contact with a conduit (3), which segments correspond to the straight walls where a wall is in contact with the next conduit (3) and another wall is in contact with the preceding conduit (3).

Such grooved perforations (1.1, 2.1) which simply offer protrusions (1.2, 2.2) and where the protrusions (1.2, 2.2) of one and the same grooved perforation (1.1, 2.1) facing one another are spaced with respect to one another, are not subjected to the separation limitation between the housings for the ends of the conduits (3) as imposed by the state of the art based on the thickness of the baffle (1, 2).

It is possible to die-cut an edge of a perforation (1.1, 2.1) with a specific embossment formed by protrusions (1.2, 2.2) and the joint in the area where the conduit (3)-conduit (3) contact is feasible since it is through a segment which facilitates wetting the brazing paste and joining by melting.

The embossment and the shape of the protrusions (1.2, 2.2) can be of different configurations and particularly in a polygonal configuration. Hexagonal shapes as shown in Figure 5 are of particular interest since they offer a high degree of compaction, facilitate the existence of straight contacting segments (3.1) between conduits (3), assure the position of the conduits (3.1) and also offer a symmetry which does not require a prior orientation of the ends of the conduits (3). The straight configuration in the contacting segments (3.1) between conduits (3) in all the embodiments gives rise to an easy to achieve configuration giving rise to good joint by welding.

The configuration of the ends of the conduits (3) according to the final configuration in the grooved perforation (1.1, 2.1) can be carried out before being introduced in the perforation (1.1, 2.1) or by means of the stamping operation which assures the fit of the conduits and the edges of the perforation (1.1, 2.1) housing them through expansion. Nevertheless, although the conduits (3) have already preformed ends, they can have a clearance which facilitates installation, and the stamping operation is also performed to assure the tight fit.

It must be interpreted in this Figure 5 that the ends of the conduits (3) are housed in the grooved perforation (1.1, 2.1) so the wall of the perforation (1.1, 2.1) is on the outside and the wall of the conduit (3), and particularly any of its segments (3.1, 3.2), is inside the perforation (1.1, 2.1). Nevertheless, the lines on the walls of the conduit (3) with reference numbers are shown in some cases from the outside rather than from the inside in order to simplify the drawing even though it does not alter the described configuration.

## Claims

1. A heat exchanger for EGR systems comprising:
- a plurality of conduits (3) intended for the passage of the EGR gas to be cooled,
- a first baffle (1) and a second baffle (2) where each baffle (1, 2) has perforations (1.1, 2.1) for the passage of the ends of the conduits (3) such that one end of the conduit (3) is housed in a perforation of the first baffle (1) by means of a leak-tight braze welded joint and the opposite end of the same conduit (3) is housed in a perforation of the second baffle (2) by means of a leak-tight braze welded joint,
- a shell (4) enclosing the assembly of conduits (3) giving rise to a chamber (C) intended for housing the coolant liquid circulating on the outside of the conduits (3), where this shell (4) comprises an inlet (4.1) for the entry of the coolant liquid and an outlet (4.2) for the exit of said coolant liquid,
where
- at least one perforation (1.1, 2.1) houses two or more ends of the conduits (3),
- the ends of the at least two or more conduits (3) housed in the same perforation (1.1, 2.1) are in contact according to their cross-section in at least one segment (3.1) of their perimeter; and,
- these same ends of the at least two or more conduits (3) housed in the same perforation (1.1, 2.1) according to the same cross-section are also in contact with the edge of the perforation (1.1, 2.1) housing it in at least another segment (3.2) of their perimeter; and,
- where the joint in segment (3.1) between the contacting conduits (3) housed in the same perforation (1.1, 2.1) and the joint in segment (3.2) between the conduits (3) and the edge of the same perforation (1.1, 2.1) are by means of brazing.

2. The exchanger according to claim 1, **characterized in that** the at least one perforation (1.1, 2.1) housing two or more ends of the conduits (3) is a longitudinal groove.

3. The exchanger according to the preceding claim, **characterized in that** the perforation (1.1, 2.1) is a groove with protrusions (1.2, 2.2) for limiting the position of the conduits (3) it houses.

4. The exchanger according to claim 3, **characterized in that** the perforation (1.1, 2.1) according to a groove with protrusions (1.2, 2.2) has a polygonal configuration.

5. The exchanger according to claim 4, **characterized in that** both the cross-section of the conduit (3) at the end joined to the edge of the perforation (1.1, 2.1) of the baffle (1, 2), and the perforation (1.1, 2.1) according to a groove with protrusions (1.2, 2.2) have a polygonal configuration, preferably a hexagonal configuration.

6. The exchanger according to any of the preceding claims, **characterized in that** one or both baffles (1, 2) has a configuration adapted to the end of the shell (4) and is or are joined to the shell (4) by means of braze welding.

7. The exchanger according to any of claims 1 to 5, **characterized in that** one or both baffles (1, 2) has a planar configuration matching the configuration of the end of the shell (4) and are surrounded by an input or output diffusing hood surrounding both the shell (4) and the baffles (1, 2) where the shell, the baffle or baffles (1, 2) and the diffusing hood are joined by braze welding.

8. A method of manufacturing a heat exchanger for EGR systems comprising the following steps:
- providing a plurality of conduits (3) intended for the passage of an EGR gas to be cooled,
- providing a first baffle (1) and a second baffle (2) with at least one perforation (1.1, 2.1) intended for housing two or more ends of the conduits (3),
- providing a shell (4) with at least one inlet (4.1) and one outlet (4.2) for the passage of the coolant, intended for enclosing the assembly of conduits (3) giving rise to a chamber (C) intended for housing the coolant liquid circulating on the outside of the conduits (3),
- coupling the first baffle (1) and the second baffle (2) to the shell (4),
- introducing the conduits (3) in the shell (4) such that one end of each conduit (3) is housed in a perforation (1.1) of the first baffle (1) and the opposite end of said conduit (3) is housed in a perforation (2.1) of the second baffle (2), and where at least one of the perforations (1.1, 2.1) houses two or more ends of a conduit (3),
- stamping the ends of the conduits (3) by means of an element acting on each hollow end of said ends of the conduits (3) to cause the expansion of said end of the conduit (3), being fitted to the edge of the perforation of the baffle (1, 2) housing it such that the ends of the conduits (3) housed in the same perforation are expanded until:
- the ends of the at least two or more conduits (3) housed in the same perforation (1.1, 2.1) are in contact according to their cross-section in at least one segment (3.1) of their perimeter; and,
- these same ends of the at least two or more conduits (3) housed in the same perforation (1.1, 2.1) according to the same cross-section are also in contact with the edge of the perforation (1.1, 2.1) housing it in at least another segment (3.2) of their perimeter
- providing a brazing paste at the ends of the conduits (3) in the area in contact with the edges of the perforations (1.1, 2.1) of the baffles (1, 2),
- heating the assembly to obtain the leak-tight welding on the contacting surfaces by means of a brazing paste.

9. The method according to claim 8, **characterized in that** before introducing the conduits (3) in the shell (4) such that one end of each conduit (3) is housed in a perforation (1.1) of the first baffle (1) and the opposite end of said conduit (3) is housed in a perforation (2.1) of the second baffle (2), a plurality of pins is introduced by way of guides the directrix of which matches the final position of the conduit (3), where each of the pins guides the path for inserting each conduit (3) and passes through the two baffles (1, 2) to facilitate said insertion.

10. The method according to claim 8, **characterized in that** one or more conduits (3) has at at least one of the ends thereof a preformed configuration adapted to the configuration of the perforation (1.1, 2.1) housing it.

11. The method according to claim 8, **characterized in that** the baffles (1, 2) have a configuration adapted to the end of the shell (4) and, before heating the assembly to obtain the welding, a brazing paste is provided between the shell (4) and the baffles (1, 2) to join them by welding.

12. The method according to claim 8, **characterized in that** the baffles (1, 2) have a planar configuration matching the configuration of the end of the shell (4) and, before heating the assembly to obtain the welding, a brazing paste is provided between the shell (4) and the baffles (1, 2), and an input or output diffusing hood is provided surrounding both the shell (4) and the baffles (1, 2) to join them by welding.
